# EUROPEAN PATENT SPECIFICATION

(11) **EP 3 182 245 B1**
(45) Date of publication and mention of the grant of the patent: **12.10.2022**
(21) Application number: 16204448.1
(22) Date of filing: 15.12.2016
(51) Int. Cl.: G06F 1/16

(54) **METHOD AND APPARATUS FOR PROVIDING USER INTERFACE OF ELECTRONIC DEVICE**
VERFAHREN UND VORRICHTUNG ZUR BEREITSTELLUNG EINER BENUTZERSCHNITTSTELLE EINER ELEKTRONISCHEN VORRICHTUNG
PROCÉDÉ ET APPAREIL POUR FOURNIR UNE INTERFACE UTILISATEUR DE DISPOSITIF ÉLECTRONIQUE

(30) Priority: 16.12.2015 KR 20150180235
(43) Date of publication of application: 21.06.2017
(73) Proprietor: Samsung Electronics Co., Ltd., Suwon-si, Gyeonggi-do 16677 (KR)
(72) Inventor: Cheong, Yusun, 16677 Suwon-si (KR); Kang, Byungjin, 16677 Suwon-si (KR); Yoo, Gwanyoung, 16677 Suwon-si (KR); Lee, Dohyung, 16677 Suwon-si (KR); Choi, Byengseok, 16677 Suwon-si (KR); Choi, Jihyun, 16677 Suwon-si (KR)
(74) Representative: Nederlandsch Octrooibureau

(56) References cited:
- EP-A2- 0 801 342
- EP-A2- 2 120 142
- WO-A1-2015/178714
- US-A1- 2008 256 439
- US-A1- 2015 116 363
- US-A1- 2015 160 931
- US-A1- 2015 331 593

## Description

### BACKGROUND

### 1. Field of the Disclosure

The present disclosure relates generally to a method and apparatus for providing a user interface of an electronic device, and more particularly, to a method and apparatus for providing various user interfaces for switching between screens of the electronic device.

### 2. Description of Related Art

Development in digital technology has led to various types of electronic devices which are capable of providing communication services and processing users' personal information while they are moving, e.g., mobile communication terminals, personal digital assistant (PDA), electronic organizer, smartphones, tablet personal computer, etc. Electronic devices utilize mobile convergence to provide additional service functions provided by other types of mobile systems, as well as their traditional service functions. For example, electronic devices can include a call function, such as a voice call, a video call, etc., a message transmission/reception function, such as short message service (SMS), multimedia message service (MMS), emails, etc. Electronic devices may also be equipped with various functions, such as an electronic organizer, a photographing function, a broadcast playback function, a video playback function, an audio playback function, an Internet access function, a messenger, a social networking service (SNS) function, etc.

Conventional electronic devices with a touch-based display however, do not provide a method of heuristically switching between application execution screens. Therefore, users of conventional electronic devices can have difficulty switching between windows.

WO 2015/178714 A1, US 2015/331593 A1, US 2008/256439 A1 and EP 0 801 342 A2 disclose devices wherein the display is split between two or more applications.

### SUMMARY

The present invention is defined in the appended independent claims. Further aspects of the invention are defined in the dependent claims.

### BRIEF DESCRIPTION OF THE DRAWINGS

The above and other aspects, features, and advantages of certain embodiments of the present disclosure will be more apparent from the following detailed description taken in conjunction with the accompanying drawings, in which:
FIG. 1 is a diagram of a network environment including an electronic device, according to an embodiment of the present disclosure;
FIG. 2 is a block diagram of an electronic device, according to an embodiment of the present disclosure;
FIG. 3 is a block diagram of a program module, according to an embodiment of the present disclosure;
FIG. 4 is a flowchart of a user interface providing method, according to a claimed embodiment of the present disclosure;
FIG. 5 is a flowchart of a user interface providing method, according an embodiment of the present disclosure;
FIG. 6 is a flowchart of a user interface providing method, according an embodiment of the present disclosure;
FIG. 7 illustrates diagrams of examples of a method of providing an electronic device with user interfaces according to execution of content or an application, according to a claimed embodiment of the present disclosure;
FIG. 8 illustrates a diagram of an example of a method of providing an electronic device with user interfaces according to execution of content or an application, according to an embodiment of the present disclosure;
FIG. 9 illustrates diagrams of examples of a method of providing an electronic device with user interfaces according to execution of content or an application, according to an embodiment of the present disclosure;
FIG. 10 illustrates diagrams of examples of an electronic device that provides user interfaces, according to an embodiment of the present disclosure;
FIG. 11 illustrates diagrams of examples of an electronic device that provides user interfaces, according to an embodiment of the present disclosure;
FIG. 12 illustrates diagrams of examples of an electronic device that provides user interfaces, according to gripping states according to an embodiment of the present disclosure;
FIG. 13 is a flowchart of a user interface providing method, according to an embodiment of the present disclosure;
FIG. 14 is a flowchart of a user interface providing method, according an embodiment of the present disclosure;
FIG. 15 illustrates a diagram of an example of an electronic device that provides a user interface when it is connected to an external electronic device, according to an embodiment of the present disclosure; and
FIG. 16 illustrates a diagram of an example of an electronic device that provides a user interface when it is connected to an external electronic device, according to an embodiment of the present disclosure.

### DETAILED DESCRIPTION

Embodiments of the present disclosure will be described herein below with reference to the accompanying drawings. However, the embodiments of the present disclosure are not limited to the specific embodiments and should be construed as including all modifications, changes, equivalent devices and methods, and/or alternative embodiments of the present disclosure. More specifically, the following detailed description and the accompanying drawings disclose a number of examples, aspects and embodiments provided for the understanding of the invention. The invention is disclosed in the passages identified as claimed embodiments, and the relative drawings if any, and its scope is defined uniquely by the appended claims.

The terms "have," "may have," "include," and "may include" as used herein indicate the presence of corresponding features (for example, elements such as numerical values, functions, operations, or parts), and do not preclude the presence of additional features.

The terms "A or B," "at least one of A or/and B," or "one or more of A or/and B" as used herein include all possible combinations of items enumerated with them. For example, "A or B," "at least one of A and B," or "at least one of A or B" means (1) including at least one A, (2) including at least one B, or (3) including both at least one A and at least one B.

The terms such as "first" and "second" as used herein may modify various elements regardless of an order and/or importance of the corresponding elements, and do not limit the corresponding elements. These terms may be used for the purpose of distinguishing one element from another element. For example, a first user device and a second user device may indicate different user devices regardless of the order or importance. For example, a first element may be referred to as a second element without departing from the scope the present disclosure, and similarly, a second element may be referred to as a first element.

It will be understood that, when an element (for example, a first element) is "(operatively or communicatively) coupled with/to" or "connected to" another element (for example, a second element), the element may be directly coupled with/to another element, and there may be an intervening element (for example, a third element) between the element and another element. To the contrary, it will be understood that, when an element (for example, a first element) is "directly coupled with/to" or "directly connected to" another element (for example, a second element), there is no intervening element (for example, a third element) between the element and another element.

The term "module" as used herein may be defined as, for example, a unit including one of hardware, software, and firmware or two or more combinations thereof. The term "module" may be interchangeably used with, for example, the terms "unit", "logic", "logical block", "component", or "circuit", and the like. The "module" may be a minimum unit of an integrated component or a part thereof. The "module" may be a minimum unit performing one or more functions or a part thereof. The "module" may be mechanically or electronically implemented. For example, the "module" may include at least one of an application-specific integrated circuit (ASIC) chip, field-programmable gate arrays (FPGAs), or a programmable-logic device, which is well known or will be developed in the future, for performing certain operations.

The terms used in describing the various embodiments of the present disclosure are for the purpose of describing particular embodiments and are not intended to limit the present disclosure. As used herein, the singular forms are intended to include the plural forms as well, unless the context clearly indicates otherwise. All of the terms used herein including technical or scientific terms have the same meanings as those generally understood by an ordinary skilled person in the related art unless they are defined otherwise. The terms defined in a generally used dictionary should be interpreted as having the same or similar meanings as the contextual meanings of the relevant technology and should not be interpreted as having ideal or exaggerated meanings unless they are clearly defined herein. According to circumstances, even the terms defined in this disclosure should not be interpreted as excluding the embodiments of the present disclosure.

Electronic devices according to the embodiments of the present disclosure may include at least one of, for example, smart phones, tablet personal computers (PCs), mobile phones, video telephones, electronic book readers, desktop PCs, laptop PCs, netbook computers, workstations, servers, personal digital assistants (PDAs), portable multimedia players (PMPs), Motion Picture Experts Group (MPEG-1 or MPEG-2) Audio Layer 3 (MP3) players, mobile medical devices, cameras, or wearable devices. According to an embodiment of the present disclosure, the wearable devices may include at least one of accessory-type wearable devices (e.g., watches, rings, bracelets, anklets, necklaces, glasses, contact lenses, or head-mounted-devices (HMDs)), fabric or clothing integral wearable devices (e.g., electronic clothes), body-mounted wearable devices (e.g., skin pads or tattoos), or implantable wearable devices (e.g., implantable circuits).

The electronic devices may be smart home appliances. The smart home appliances may include at least one of, for example, televisions (TVs), digital versatile disk (DVD) players, audios, refrigerators, air conditioners, cleaners, ovens, microwave ovens, washing machines, air cleaners, set-top boxes, home automation control panels, security control panels, TV boxes (e.g., Samsung HomeSync^{™}, Apple TV^{™}, or Google TV^{™}), game consoles (e.g., Xbox^{™} and PlayStation^{™}), electronic dictionaries, electronic keys, camcorders, or electronic picture frames.

The electronic devices may include at least one of various medical devices (e.g., various portable medical measurement devices (such as blood glucose meters, heart rate monitors, blood pressure monitors, or thermometers, and the like), a magnetic resonance angiography (MRA) device, a magnetic resonance imaging (MRI) device, a computed tomography (CT) device, scanners, or ultrasonic devices, and the like), navigation devices, global positioning system (GPS) receivers, event data recorders (EDRs), flight data recorders (FDRs), vehicle infotainment devices, electronic equipment for vessels (e.g., navigation systems, gyrocompasses, and the like), avionics, security devices, head units for vehicles, industrial or home robots, automatic teller machines (ATMs), points of sales (POSs) devices, or Internet of Things (IoT) devices (e.g., light bulbs, various sensors, electric or gas meters, sprinkler devices, fire alarms, thermostats, street lamps, toasters, exercise equipment, hot water tanks, heaters, boilers, and the like).

The electronic devices may further include at least one of parts of furniture or buildings/structures, electronic boards, electronic signature receiving devices, projectors, or various measuring instruments (such as water meters, electricity meters, gas meters, or wave meters, and the like). The electronic devices may be one or more combinations of the above-mentioned devices. The electronic devices may be flexible electronic devices. Also, the electronic devices are not limited to the above-mentioned devices, and may include new electronic devices according to the development of new technologies.

Hereinafter, the electronic devices according to various embodiments of the present disclosure will be described with reference to the accompanying drawings. The term "user" as used herein may refer to a person who uses an electronic device or may refer to a device (e.g., an artificial intelligence electronic device) which uses an electronic device.

In accordance with the present disclosure, a screen of an electronic device may be split into at least two windows according to a predefined split manner and displayed through a display of an electronic device. The windows are defined as split windows. The split windows are defined as windows displayed on a display of an electronic device not to be superposed one on another.

A popup window can be defined as a window displayed on a display of an electronic device to hide or to be superposed on a portion of a screen under execution.

An electronic device using split window and a popup window can be capable of displaying two or more application execution screens or function execution screens. Thus, the split windows and the popup window are defined as a multi-window.

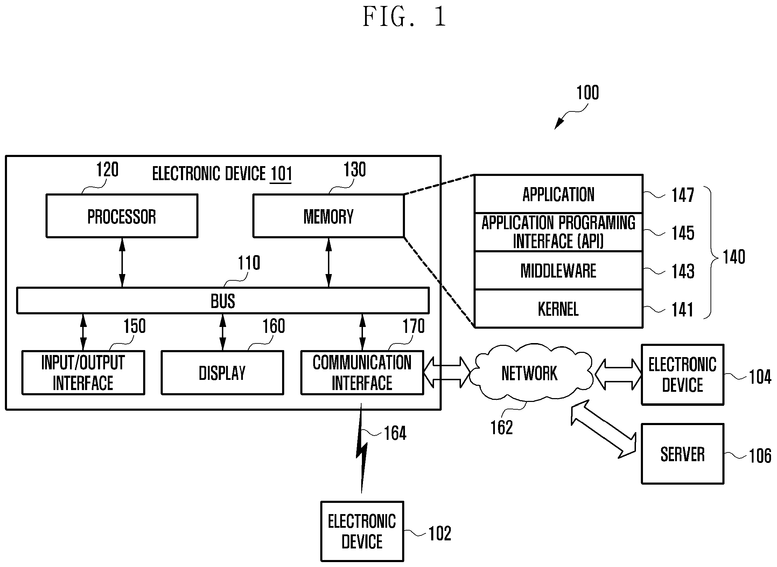

FIG. 1 is a diagram of a network environment 100 including an electronic device 101 according to an embodiment of the present disclosure. Referring to FIG. 1, the electronic device 101 includes a bus 110, a processor 120, a memory 130, an input/output interface150, a display 160 and a communication interface 170.

The bus 110 may be a circuit connecting the above described components and transmitting communication (for example, a control message) between the above described components. The processor 120 receives commands from other components (for example, the memory 130, the input/output interface 150, the display 160, the communication interface 170) through the bus 110, analyzes the received commands, and executes calculation or data processing according to the analyzed commands. The memory 130 stores commands or data received from the processor 120 or other components (for example, the input/output interface 150, the display 160, or the communication interface 170) or generated by the processor 120 or other components. The memory 130 may include programming modules 140, for example, a kernel 141, middleware 143, an application programming interface (API) 145, and an application 147. Each of the aforementioned programming modules may be implemented by software, firmware, hardware, or a combination of two or more thereof.

The kernel 141 controls or manages system resources (for example, the bus 110, the processor 120, or the memory 130) used for executing an operation or function implemented by the remaining other programming modules, for example, the middleware 143, the API 145, or the application 147. Further, the kernel 141 provides an interface for accessing individual components of the electronic device 101 from the middleware 143, the API 145, or the application 147 to control or manage the components. The middleware 143 performs a relay function of allowing the API 145 or the application 147 to communicate with the kernel 141 to exchange data. Further, in operation requests received from the application 147, the middleware 143 performs a control for the operation requests (for example, scheduling or load balancing) by using a method of assigning a priority, by which system resources (for example, the bus 110, the processor 120, the memory 130 and the like) of the electronic device 101 can be used, to the application 147.

The API 145 is an interface by which the application 147 can control a function provided by the kernel 141 or the middleware 143 and includes, for example, at least one interface or function (for example, command) for a file control, a window control, image processing, or a character control. The input/output interface 150 can receive, for example, a command and/or data from a user, and transfer the received command and/or data to the processor 120 and/or the memory 130 through the bus 110. The display 160 can display an image, a video, and/or data to a user.

The display 160 may display a graphic user interface (GUI) image for interaction between the user and the electronic device 101. The GUI image may include interface information to activate a function for correcting color of the image to be projected onto the screen. The interface information may be in the form of, for example, a button, a menu, or an icon. The communication interface 170 connects communication between the electronic device 101 and electronic devices 102, 104 or server 106. For example, the communication interface 170 may access a network 162 through wireless or wired communication to communicate with the external device. The wireless communication includes at least one of, for example, wireless-fidelity (WiFi), bluetooth (BT), near field communication (NFC), a global positioning system (GPS), and cellular communication (for example, long term evolution (LTE), LTE-Advanced (LTE-A), code division multiple access (CDMA), wideband CDMA (WCDMA), universal mobile telecommunications system (UMTS), wireless broadband (WiBro) or global system for mobile communications (GSM)). The wired communication may include at least one of, for example, a universal serial bus (USB), a high definition multimedia interface (HDMI), recommended standard 232 (RS-232), and a plain old telephone service (POTS).

The server 106 supports driving of the electronic device 101 by performing at least one operation (or function) implemented by the electronic device 101. For example, the server 106 may include a communication control server module that supports the communication interface 170 implemented in the electronic device 101. For example, the communication control server module may include at least one of the components of the communication interface 170 to perform (on behalf of) at least one operations performed by the communication interface 170.

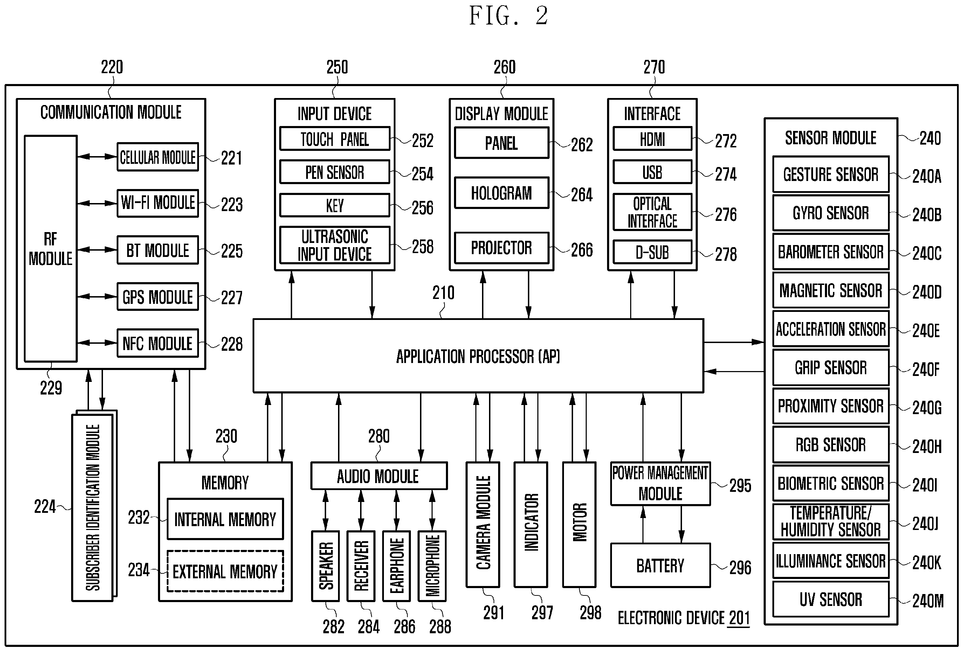

FIG. 2 is a block diagram of an electronic device 201 according to an embodiment of the present disclosure. The electronic device 201 may include all or some of the parts of the electronic device 101 illustrated in FIG. 1. Referring to FIG. 2, the electronic device 201 includes one or more application processors (APs) 210, a communication module 220, a subscriber identification module (SIM) 224, a memory 230, a sensor module 240, an input device 250, a display module 260, an interface 270, an audio module 280, a camera module 291, a power managing module 295, a battery 296, an indicator 297, and a motor 298.

The AP 210 operates an operating system (OS) or an application program so as to control a plurality of hardware or software component elements connected to the AP 210 and execute various data processing and calculations including multimedia data. The AP 210 may be implemented by, for example, a system on chip (SoC). The processor 210 may further include a graphic processing unit (GPU).

The communication module 220 transmits/receives data in communication between different electronic devices (for example, the electronic devices 102/104 and the server 106) connected to the electronic device 201 (through a network. The communication module 220 includes a cellular module 221, a WiFi module 223, a BT module 225, a GPS module 227, an NFC module 228, and a radio frequency (RF) module 229.

The cellular module 221 provides a voice, a call, a video call, a short message service (SMS), or an Internet service through a communication network (for example, LTE, LTE-A, CDMA, WCDMA, UMTS, WiBro, GSM or the like). Further, the cellular module 221 may distinguish and authenticate electronic devices within a communication network by using the SIM 224. The cellular module 221 performs at least some of the functions which can be provided by the AP 210. For example, the cellular module 221 may perform at least some of the multimedia control functions.

The cellular module 221 may include a communication processor (CP). Further, the cellular module 221 may be implemented by, for example, a SoC.

The AP 210 or the cellular module 221 (for example, a communication processor) may load a command or data received from at least one of a non-volatile memory and other components connected to each of the AP 210 and the cellular module 221 to a volatile memory and process the loaded command or data. Further, the AP 210 or the cellular module 221 may store data received from at least one of other components or generated by at least one of other components in a non-volatile memory.

Each of the WiFi module 223, the BT module 225, the GPS module 227, and the NFC module 228 may include, for example, a processor for processing data transmitted/received through the corresponding module. Although the cellular module 221, the WiFi module 223, the BT module 225, the GPS module 227, and the NFC module 228 are illustrated as blocks separate from each other, at least some (for example, two or more) of the cellular module 221, the WiFi module 223, the BT module 225, the GPS module 227, and the NFC module 228 may be included in one integrated chip (IC) or one IC package. For example, at least some of the processors corresponding to the cellular module 221, the WiFi module 223, the BT module 225, the GPS module 227, and the NFC module 228 may be implemented by one SoC.

The RF module 229 transmits/receives data, for example, an RF signal. Although not illustrated, the RF module 229 may include, for example, a transceiver, a power amp module (PAM), a frequency filter, a low noise amplifier (LNA) or the like. Further, the RF module 229 may further include a component for transmitting/receiving electronic waves over a free air space in wireless communication, for example, a conductor, a conducting wire, or the like. Although the cellular module 221, the WiFi module 223, the BT module 225, the GPS module 227, and the NFC module 228 share one RF module 229 in FIG. 2, at least one of the cellular module 221, the WiFi module 223, the BT module 225, the GPS module 227, and the NFC module 228 may transmit/receive an RF signal through a separate RF module according to one embodiment.

The SIM 224 may include, for example, a card which includes an embedded SIM 224. The SIM 224 includes unique identification information (for example, Integrated circuit card identifier (ICCID)) or subscriber information (for example, international mobile subscriber identity (IMSI)).

The memory 230 may include an internal memory 232 or an external memory 234. The internal memory 232 may include, for example, at least one of a volatile memory (for example, a random access memory (RAM), a dynamic RAM (DRAM), a static RAM (SRAM), a synchronous dynamic RAM (SDRAM), and the like), and a non-volatile Memory (for example, a read only memory (ROM), a one time programmable ROM (OTPROM), a programmable ROM (PROM), an erasable and programmable ROM (EPROM), an electrically erasable and programmable ROM (EEPROM), a mask ROM, a flash ROM, a NAND flash memory, an NOR flash memory, and the like).

The internal memory 232 may be a solid state drive (SSD). The external memory 234 may further include a flash drive, for example, a compact flash (CF), a secure digital (SD), a micro secure digital (Micro-SD), a mini secure digital (Mini-SD), an extreme Digital (xD), or a memory stick. The external memory 234 may be functionally connected to the electronic device 200 through various interfaces. The electronic device 201 may further include a storage device (or storage medium) such as a hard drive.

The sensor module 240 measures a physical quantity or detects an operation state of the electronic device 201, and converts the measured or detected information to an electronic signal. The sensor module 240 may include, for example, at least one of a gesture sensor 240A, a gyro sensor 240B, an atmospheric pressure (barometric) sensor 240C, a magnetic sensor 240D, an acceleration sensor 240E, a grip sensor 240F, a proximity sensor 240G, a color sensor 240H (for example, red, green, and blue (RGB) sensor) 240H, a biometric sensor 2401, a temperature/humidity sensor 240J, an illumination (light) sensor 240K, and a ultra violet (UV) sensor 240M. Additionally or alternatively, the sensor module 240 may include, for example, a E-nose sensor, an electromyography (EMG) sensor, an electroencephalogram (EEG) sensor, an electrocardiogram (ECG) sensor, an infrared (IR) sensor, an iris sensor, a fingerprint sensor (not illustrated), and the like. The sensor module 240 may further include a control circuit for controlling one or more sensors included in the sensor module 240.

The input device 250 includes a touch panel 252, a (digital) pen sensor 254, a key 256, and an ultrasonic input device 258. For example, the touch panel 252 may recognize a touch input in at least one type of a capacitive type, a resistive type, an infrared type, and an acoustic wave type. The touch panel 252 may further include a control circuit. In the capacitive type, the touch panel 252 can recognize proximity as well as a direct touch. The touch panel 252 may further include a tactile layer. In this event, the touch panel 252 provides a tactile reaction to the user.

The (digital) pen sensor 254 may be implemented, for example, using a method identical or similar to a method of receiving a touch input of the user, or using a separate recognition sheet. The key 256 may include, for example, a physical button, an optical key, or a key pad. The ultrasonic input device 258 is a device which can detect an acoustic wave by a microphone 288 of the electronic device 201 through an input means generating an ultrasonic signal to identify data and can perform wireless recognition. The electronic device 201 receives a user input from an external device (for example, computer or server) connected to the electronic device 201 by using the communication module 220.

The display module 260 includes a panel 262, a hologram device 264, and a projector 266. The panel 262 may be, for example, a liquid crystal display (LCD) or an active matrix organic light emitting diode (AM-OLED). The panel 262 may be implemented to be, for example, flexible, transparent, or wearable. The panel 262 may be configured by the touch panel 252 and one module. The hologram device 264 shows a stereoscopic image in the air by using interference of light. The projector 266 projects light on a screen to display an image. For example, the screen may be located inside or outside the electronic device 201. The display module 260 may further include a control circuit for controlling the panel 262, the hologram device 264, and the projector 266.

The interface 270 includes, for example, an HDMI 272, a USB 274, an optical interface 276, and a d-subminiature (D-sub) 278. The interface 270 may be included in, for example, the communication interface170 illustrated in FIG. 1. Additionally or alternatively, the interface 270 may include, for example, an Mobile High-Definition Link (MHL) interface, a SD card/multi-media card (MMC), or an infrared data association (IrDA) standard interface.

The audio module 280 bi-directionally converts a sound and an electronic signal. At least some components of the audio module 280 may be included in, for example, the input/output interface150 illustrated in FIG. 1. The audio module 280 processes sound information input or output through, for example, a speaker 282, a receiver 284, an earphone 286, the microphone 288, and the like.

The camera module 291 is a device which can photograph a still image and a video. The camera module 291 may include one or more image sensors (for example, a front sensor or a back sensor), an image signal processor (ISP) or a flash (for example, a light emitting diode (LED) or xenon lamp).

The power managing module 295 manages power of the electronic device 201. Although not illustrated, the power managing module 295 may include, for example, a power management integrated circuit (PMIC), a charger Integrated Circuit (IC), or a battery gauge.

The PMIC may be mounted to, for example, an integrated circuit or an SoC semiconductor. A charging method may be divided into wired and wireless methods. The charger IC charges a battery and prevents over voltage or over current from flowing from a charger. The charger IC includes a charger IC for at least one of the wired charging method and the wireless charging method. The wireless charging method may include, for example, a magnetic resonance method, a magnetic induction method and an electromagnetic wave method, and additional circuits for wireless charging, for example, circuits such as a coil loop, a resonant circuit, a rectifier or the like may be added.

The battery gauge measures, for example, a remaining quantity of the battery 296, or a voltage, a current, or a temperature during charging. The battery 296 may store or generate electricity and supply power to the electronic device 201 by using the stored or generated electricity. The battery 296 may include a rechargeable battery or a solar battery. The indicator 297 shows particular statuses of the electronic device 201 or a part (for example, AP 210) of the electronic device 201, for example, a booting status, a message status, a charging status and the like. The motor 298 converts an electrical signal to a mechanical vibration.

The electronic device 201 may include a processing unit (for example, GPU) for supporting a mobile TV. The processing unit for supporting the mobile TV may process, for example, media data according to a standard of digital multimedia broadcasting (DMB), digital video broadcasting (DVB), media flow or the like.

Each of the components of the electronic device 201 may be implemented by one or more components and the name of the corresponding component may vary depending on a type of the electronic device 201. The electronic device 201 may include at least one of the above described components, a few of the components may be omitted, or additional components may be further included. Also, some of the components of the electronic device 201 may be combined to form a single entity, and thus may equivalently execute functions of the corresponding components before being combined.

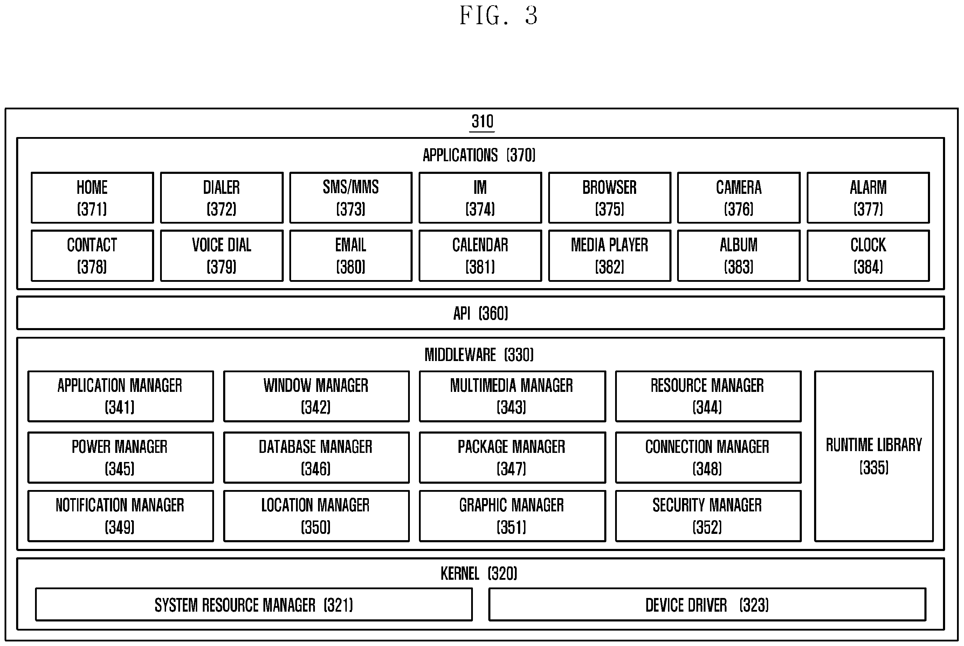

FIG. 3 is a block diagram of a programming module 310 according to an embodiment of the present disclosure. The programming module 310 may be included (stored) in the electronic device 101 (for example, the memory 130) illustrated in FIG. 1. At least some of the programming module 310 may be formed of software, firmware, hardware, or a combination of at least two of software, firmware, and hardware. The programming module 310 may be executed in the hardware (to include an OS controlling resources related to the electronic device 101 or various applications (for example, applications 370) driving on the OS. For example, the OS may be Android^{™}, iOS^{™}, Windows^{™}, Symbian^{™}, Tizen^{™}, Bada^{™} or the like. Referring to FIG. 3, the programming module 310 includes a kernel 320, a middleware 330, an API 360, and applications 370.

The kernel 320 includes a system resource manager 321 and a device driver 323. The system resource manager 321 may include, for example, a process manager, a memory manager, and a file system manager. The system resource manager 321 performs a system resource control, allocation, and recall. The device driver 323 may include, for example, a display driver, a camera driver, a BT driver, a shared memory driver, a USB driver, a keypad driver, a WiFi driver, and an audio driver. Further, the device driver 323 may include an inter-process communication (IPC) driver. The middleware 330 includes a plurality of modules prepared in advance to provide a function required in common by the applications 370. Further, the middleware 330 provides a function through the API 360 to allow the application 370 to efficiently use limited system resources within the electronic device. For example, as illustrated in FIG. 3, the middleware 300 includes at least one of a runtime library 335, an application manager 341, a window manager 342, a multimedia manager 343, a resource manager 344, a power manager 345, a database manager 346, a package manager 347, a connection manager 348, a notification manager 349, a location manager 350, a graphic manager 351, and a security manager 352. The runtime library 335 includes, for example, a library module used by a complier to add a new function through a programming language while the application 370 is executed. The runtime library 335 executes input and output, management of a memory, a function associated with an arithmetic function and the like. The application manager 341 manages, for example, a life cycle of at least one of the applications 370. The window manager 342 manages GUI resources used on the screen. The multimedia manager 343 detects a format required for reproducing various media files and performs an encoding or a decoding of a media file by using a codec suitable for the corresponding format. The resource manager 344 manages resources such as a source code, a memory, or a storage space of at least one of the applications 370.

The power manager 345 operates together with a basic input/output system (BIOS) to manage a battery or power and provides power information required for the operation. The database manager 346 manages generation, search, and change of a database to be used by at least one of the applications 370. The package manager 347 manages an installation or an update of an application distributed in a form of a package file.

The connection manager 348 manages, for example, a wireless connection such as WiFi or BT. The notification manager 349 displays or notifies a user of an event such as an arrival message, an appointment, a proximity alarm or the like, in a manner that does not disturb the user. The location manager 350 manages location information of the electronic device. The graphic manager 351 manages a graphic effect provided to the user or a user interface related to the graphic effect. The security manager 352 provides a general security function required for a system security or a user authentication. When the electronic device 101 or 201 has a call function, the middleware 330 may further include a telephony manager for managing a voice of the electronic device or a video call function. The middleware 330 may generate a new middleware module through a combination of various functions of the aforementioned internal component modules and use the generated new middleware module. The middleware 330 may provide a module specified for each type of operating system to provide a differentiated function. Further, the middleware 330 may dynamically delete some of the conventional components or add new components. Accordingly, some of the components described herein may be omitted, replaced with other components having different names but performing similar functions, or other components may be further included.

The API 360 (is a set of API programming functions, and may be provided with a different configuration according to an OS. For example, in Android^{™} or iOS^{™}, a single API set may be provided for each platform. In Tizen^{™}, two or more API sets may be provided. The applications 370, which may include an application similar to the application 134, may include, for example, a preloaded application and/or a third party application. The applications 370 may include a home application 371, a dialer application 372, an SMS)/ MMS application 373, an Instant Messaging (IM) application 374, a browser application 375, a camera application 376, an alarm application 377, a contact application 378, a voice dial application 379, an email application 380, a calendar application 381, a media player application 382, an album application 383, and a clock application 384. However, the present disclosure is not limited thereto, and the applications 370 may include any other similar and/or suitable application. At least a part of the programming module 310 can be implemented by commands stored in computer-readable storage media. When the commands are executed by at least one processor, e.g. the AP 210, the at least one processor can perform functions corresponding to the commands. The computer-readable storage media may be, for example, the memory 230. At least a part of the programming module 310 can be implemented, e.g. executed, by, for example, the AP 210. At least a part of the programming module 310 may include, for example, a module, a program, a routine, a set of instructions and/or a process for performing at least one function.

The aforementioned elements of the programming module 310 may vary depending on the type of the OS. The programming module 310 may include at least one of the aforementioned elements and/or may further include other additional elements, and/or some of the aforementioned elements may be omitted. The operations performed by a programming module 310 and/or other elements may be processed through a sequential, parallel, repetitive, and/or heuristic method, and some of the operations may be omitted and/or other operations may be added.

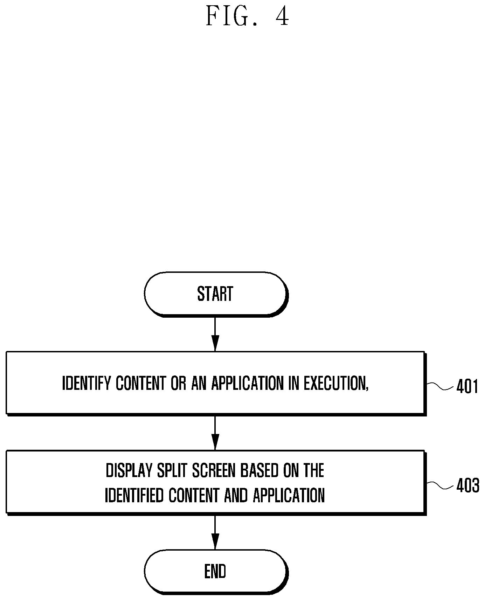

FIG. 4 is a flowchart of a user interface providing method, according to an embodiment of the present disclosure.

The electronic device 201 is capable of identifying content or an application that has been executed in response to a command (e.g., the control) of the processor 210 in step 401.

According to a claimed embodiment, the electronic device 201 is capable of providing various screens according to features of the identified application and/or content. For example, the electronic device 201 is capable of determining an aspect ratio and/or a split ratio based on features of the identified application and/or content. The electronic device 201 is capable of displaying an application and/or content on the display module 260, according to the determined aspect ratio and/or split ratio. For example, the aspect ratio of at least one or more applications or content is referred to as the ratio of the width to the height. The split ratio of at least one or more application or content is referred to as the ratio of split screens (windows).

According to a claimed embodiment, the electronic device 201 determines the aspect ratios according to features of content and applications and storing the aspect ratios in the memory 230. The electronic device 201 is also capable of storing a list of features of content and applications in the memory 230 and determining an aspect ratio according to a corresponding feature. The features of content and applications may be classified into various categories, e.g., information, communication, productivity, and multimedia. For example, when content or an application is Internet based, Chrome^{™}, or Facebook^{™}, the electronic device 201 classifies the feature of the content or application into information category, and lists and stores the feature in the memory 230. When a feature of content or an application is classified into information category, it may prove advantageous that the content or an application be displayed with as much details as possible. The electronic device 201 is capable of storing aspect ratios of content and applications whose features are classified into information category in the memory, or determining an aspect ratio according to a corresponding feature.

For example, when content or an application is Whatsapp^{™}, Kakaotalk^{™}, or Wechat^{™}, the electronic device 201 classifies the feature of the content or application into communication category, and lists and stores the feature in the memory 230. When a feature of content or an application is classified into communication category, it may prove advantageous that the content or application be simultaneously displayed on a number of screens. The electronic device 201 is capable of storing aspect ratios of content and applications whose features are classified into communication category in the memory, or determining an aspect ratio according to a corresponding feature.

For example, when content or an application is a function of creating a memo, a notification, or session initiation protocol (SIP) task, the electronic device 201 classifies the feature of the content or application into productivity category, and lists and stores the feature in the memory 230. When a feature of content or an application is classified into productivity category, it may prove advantageous that the content or application be displayed, with the usability, on the screen. The electronic device 201 is capable of storing aspect ratios of content and applications whose features are classified into productivity category in the memory, or determining an aspect ratio according to a corresponding feature.

For example, when content or an application is a multimedia player, the electronic device 201 classifies the feature of the content or application into multimedia category, and lists and stores the feature in the memory 230. When a feature of content or an application is classified into multimedia category, it may prove advantageous that the content or application be displayed, with immersion, or without disturbance, on the screen. The electronic device 201 is capable of storing aspect ratios of content and applications whose features are classified into multimedia category in the memory, or determining an aspect ratio according to a corresponding feature.

Referring back to FIG. 4, the electronic device 201 is also capable of identifying a user's pattern of use of applications in step 401 where it identifies content or an application in execution. To this end, the electronic device 200 (e.g., processor 210) is capable of collecting patterns of use of applications. The collected use patterns of applications may be information regarding an application being executed, information regarding an event preset for an application, etc. An example the information regarding an event preset for an application, etc. is information related to splitting the screen.

The electronic device 201 is capable of displaying split screen based on the identified content and application, on the display module 260, according to a command of the processor 210 in step 403.

The electronic device 201 is capable of storing information regarding the features of content and applications in the memory 230. When a corresponding application and/or content are executed, the electronic device 201 compares the feature of the content or application being executed with information regarding the features of content and applications stored in the memory 230 and identifies characteristics of the feature of the content or application being executed.

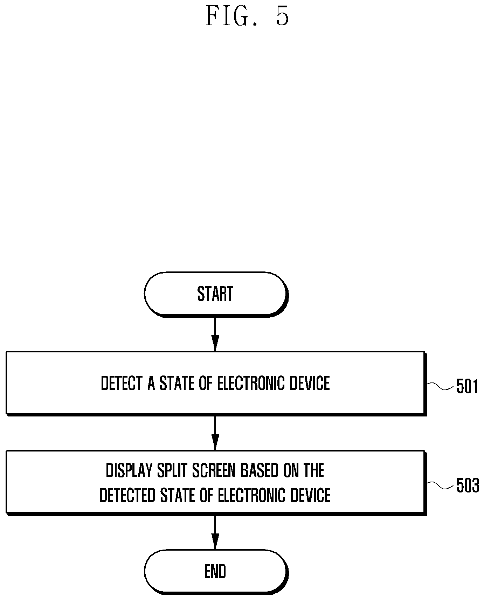

FIG. 5 is a flowchart of a user interface providing method, according to an embodiment of the present disclosure.

The electronic device 201 is capable of detecting its state in response to a command of the processor 210, in step 501.

The electronic device 201 may be implemented to be foldable. In this case, the foldable type electronic device 201 is capable of detecting the state (e.g., a folding angle). The electronic device 201 may also detect other states, e.g., the orientation (e.g., width and length).

The electronic device 201 is capable of displaying, on the display module 260, a split screen based on the detected state in response to a command of the processor 210, in step 503.

For example, when the foldable type electronic device 201 is completely unfolded (e.g., the display module 260 is flat so that the folding angle is 180° seen from the side), it performs the steps shown in FIG. 4.

When the foldable type electronic device 201 is folded at a certain angle, it is capable of splitting and displaying the screen area of the display module 260 on the basis of the folded line.

The electronic device 201 is capable of displaying an application or content on one of the split screen areas of the display module 260, split on the basis of the folded line of the display module 260 and another application or content on the other split screen area, in a preset aspect ratio, according to the detected state of the electronic device 201 (e.g., a bent or folded state of the electronic device 201).

The electronic device 201 is capable of displaying various screens on the display module 260, according to its detected states, e.g., the orientation of the electronic device 201 (e.g., width and length).

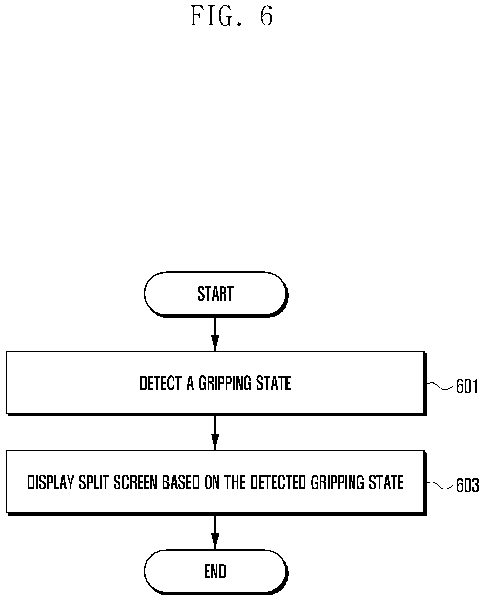

FIG. 6 is a flowchart of a user interface providing method, according to an embodiment of the present disclosure.

The electronic device 201 is capable of detecting its gripping state in response to a command of the processor 210, in step 601.

The electronic device 201 is capable of detecting a user's gripping state, using a touch panel 252 or a sensor (e.g., the grip sensor 240F).

The electronic device 201 is capable of detecting the gripping state by detecting a user's contact area and/or a user's gripping location on the touch panel 252.

The electronic device 201 is capable of displaying, on the display module 260, split screen based on the detected gripping state in response to a command of the processor 210, in step 603.

The process of displaying split screen based on the detected gripping state on the display module 260 includes determining a split ratio according to a user's contact area on the touch panel 252, and displaying split screen based on the determined split ratio.

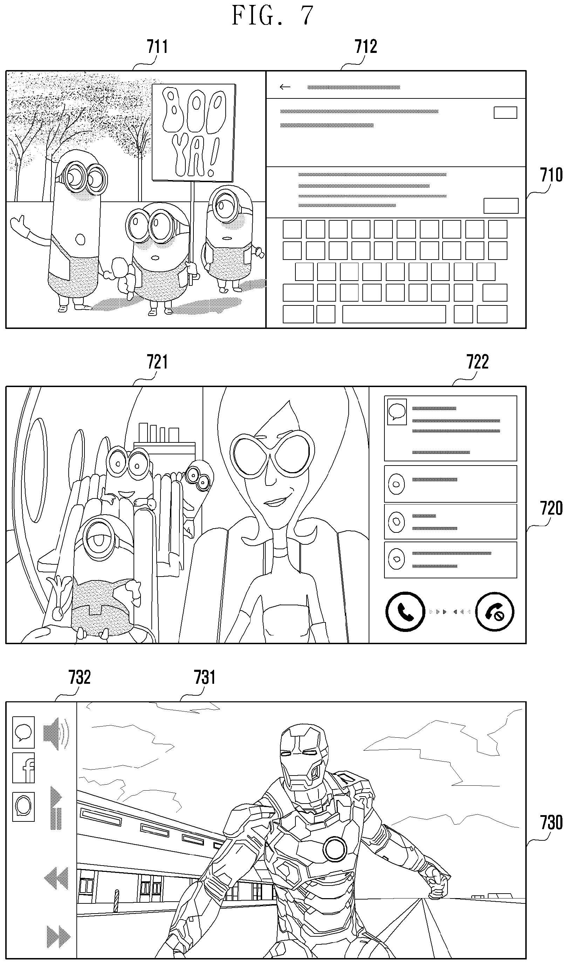

FIG. 7 illustrates diagrams of examples of a method of providing an electronic device 201 with user interfaces according to content or an application being executed, according to an embodiment of the present disclosure.

The electronic device 201 is capable of storing information regarding the features of content and applications in the memory 230. When a corresponding application and/or content are executed, the electronic device 201 compares the feature of the content or application being executed with information regarding the features of content and applications stored in the memory 230 and identifies characteristics of the feature of the content or application being executed.

The electronic device 201 is capable of providing various screens according to features of the identified application and/or content. For example, the electronic device 201 is capable of determining an aspect ratio and/or a split ratio based on features of the identified application and/or content. The electronic device 201 is capable of displaying an application and/or content on the display module 260, according to the determined aspect ratio and/or split ratio. For example, the aspect ratio of at least one or more applications or content is referred to as the ratio of the width to the height. The split ratio of at least one or more application or content is referred to as the ratio of split screens (windows).

With reference to diagram 710, according to a claimed embodiment, when the identified application is a multimedia player-related application and/or a message-related application (e.g., SMS, MMS, IM, etc.) or when the identified content is multimedia and/or messages, the electronic device 201 discovers features of the application and/or content and displays an optimized user interface on the display module 260. For example, as shown in diagram 710, the electronic device 201 may store the aspect ratio (e.g., the aspect ratio of width to height, 4:3) of multimedia content 711 or a multimedia player-related application 711 in the memory 230. The electronic device 201 may store the aspect ratio (e.g., the aspect ratio of width to height, 4:3) of message-related content 712 or a message-related application 712 in the memory 230. When the multimedia player-related application 711 or multimedia content 711 and/or a message-related application 712 or message-related content 712 are executed, the electronic device 201 is capable of displaying, on the display module 260, the multimedia player-related application 711 or the multimedia content 711 and/or the message-related application 712 or the message-related content 712, in the aspect ratio of multimedia content 711 or the multimedia player-related application 711 and/or in the aspect ratio of message-related content 712 or the message-related application 712, based on the aspect ratio and split ratio stored in the memory 230, according to the features of the content or application being executed.

With reference to diagram 720, when the identified application is a multimedia player-related application and/or a notification-related application or when the identified content is multimedia and/or notifications, the electronic device 201 discovers features of the application and/or content and displays an optimized user interface on the display module 260. For example, as shown in diagram 720, the electronic device 201 may store the aspect ratio (e.g., the aspect ratio of width to height, 16:9) of multimedia content 721 or a multimedia player-related application 721 in the memory 230. The electronic device 201 may store the aspect ratio (e.g., the aspect ratio of width to height, 8:9) of notification-related content 722 or a notification-related application 722 in the memory 230. When the multimedia player-related application 721 or multimedia content 721 and/or a notification-related application 722 or notification-related content 722 are executed, the electronic device 201 is capable of displaying, on the display module 260, the multimedia player-related application 721 or the multimedia content 721 and/or the notification-related application 722 or the notification-related content 722, in the aspect ratio of multimedia content 721 or the multimedia player-related application 721 and/or in the aspect ratio of notification-related content 722 or the notification-related application 722, based on the aspect ratio and split ratio stored in the memory 230, according to the features of the content or application being executed.

With reference to diagram 730, when the identified application is a multimedia player or when the identified content is multimedia, the electronic device 201 discovers features of the application and/or content and displays an optimized user interface on the display module 260. For example, as shown in diagram 730, the electronic device 201 may store the aspect ratio (e.g., the aspect ratio of width to height, 21:9) of multimedia content 731 in a multimedia player-related application in the memory 230. The electronic device 201 may store the aspect ratio (e.g., the aspect ratio of width to height, 3:9) of multimedia control-related content 732 in the memory 230. When the application is executed, the electronic device 201 is capable of displaying, on the display module 260, the multimedia content 731 and/or the multimedia control-related content 732, in the aspect ratio of the multimedia content 731 and/or in the aspect ratio of the multimedia control-related content 732, based on the aspect ratio and split ratio stored in the memory 230, according to the feature of content of the application being executed.

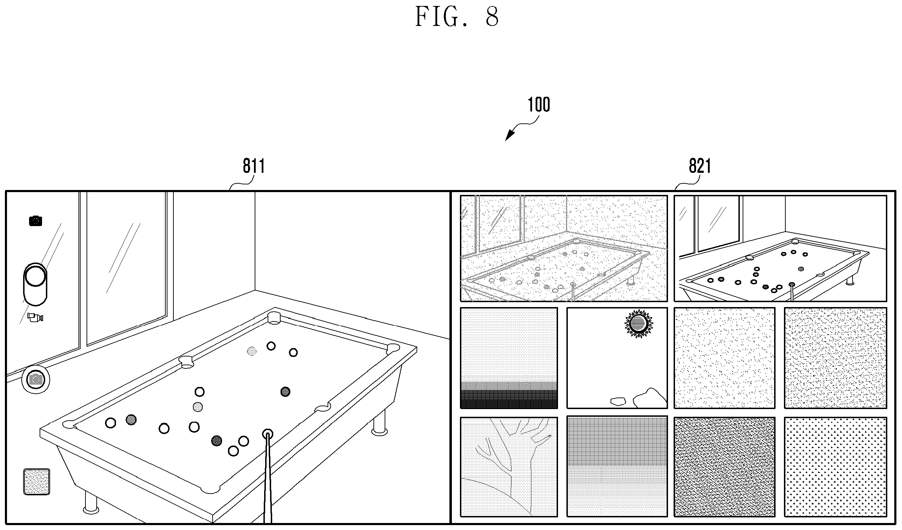

FIG. 8 illustrates a diagram of an example of a method of providing an electronic device 201 with user interfaces according to content or an application being executed, according to an embodiment of the present disclosure.

The electronic device 201 is capable of storing information regarding the features of content and applications in the memory 230. When a corresponding application and/or content are executed, the electronic device 201 compares the feature of the content or application being executed with information regarding the features of content and applications stored in the memory 230 and identifies characteristics of the feature of the content or application being executed.

As shown in diagram 810, when the application being executed is a camera application, the electronic device 201 is capable of displaying split screen on the display module 260, one of which is a preview screen 811 displaying images obtained via the camera in executed and/or the other of which is a gallery screen 812 showing photographs or videos in split view mode.

For example, when the application being executed is a camera application, the electronic device 201 is capable of having stored, in the memory 230, the aspect ratio (e.g., the aspect ratio of width to height, 4:3) of the preview screen 811 and/or the aspect ratio (e.g., the aspect ratio of width to height, 4:3) of the gallery screen 812. When the camera application is executed, the electronic device 201 is capable of displaying the preview screen 811 and/or the gallery screen 812, in a preset ratio, on the single screen.

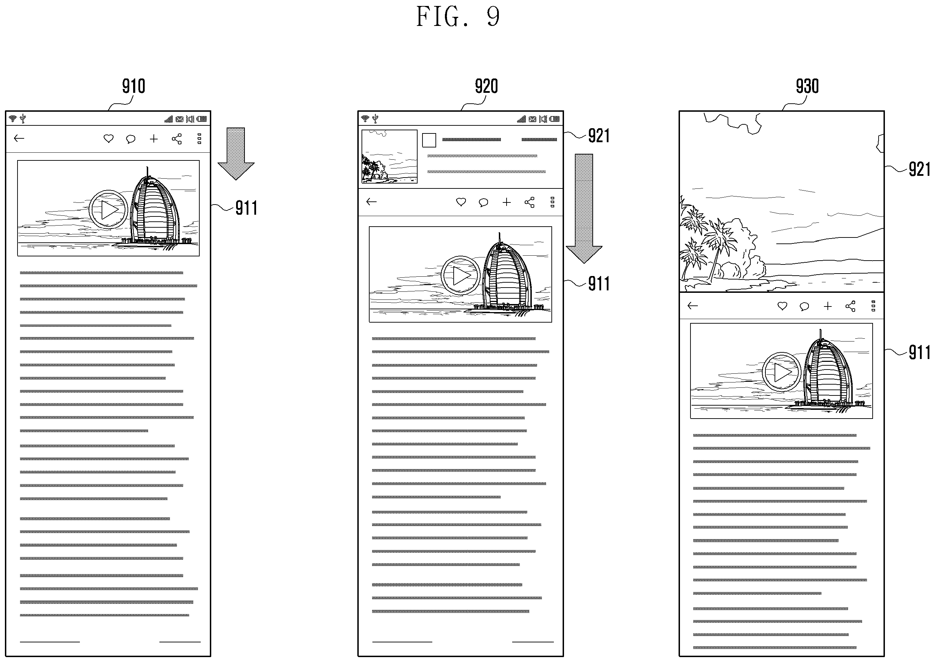

FIG. 9 illustrates diagrams of examples of a method of providing an electronic device 201 with user interfaces according to content or an application being executed, according to an embodiment of the present disclosure.

The electronic device 201 is capable of storing information regarding the features of content and applications in the memory 230. When a corresponding application and/or content are executed, the electronic device 201 compares the feature of the content or application being executed with information regarding the features of content and applications stored in the memory 230 and identifies characteristics of the feature of the content or application being executed.

As shown in diagram 910, the electronic device 201 is capable of executing an application (e.g., Internet application 911) on a single screen. As shown in diagram 920 or 930, when a notification is created while executing the application, the electronic device 201 splits the single screen of the display module 260 into separate sections and displays the notification-related application 921 or the notification content 921 on the separated sections respectively.

As shown in diagram 920 or 930, when a multi-tasking event, such as a notification, etc., occurs, the electronic device 201 changes the single screen displaying the Internet application 911 from one aspect ratio (e.g., the aspect ratio of width to height, 24:9) to another aspect ratio (e.g., the aspect ratio of width to height, 16:9) according to a split ratio. The electronic device 201 is capable of displaying the notification content or application 921 on the split screens, according to the aspect ratio (e.g., the aspect ratio of width to height, 8:9), based on a stored display ratio of notification content or an application.

The Internet application 911 may be displayed in a page turning form (e.g., swipe operation) or a scroll bar form with a range of extension.

For example, when the electronic device 201 is in a portrait display mode, it is capable of displaying the Internet application 911 with a scroll bar. For example, when the electronic device 201 is in a landscape display mode, it is capable of displaying the Internet application 911 in a paging turning form (e.g., swipe operation).

As shown in diagram 920 or 930, when a multi-tasking event occurs, the electronic device 201 changes the Internet application 911 in display from one aspect ratio (e.g., the aspect ratio of width to height, 24:9) to another aspect ratio (e.g., the aspect ratio of width to height, 16:9) according to the multi-tasking operation. The electronic device 201 is capable of displaying the content or application 921, on the split screens, according to a preset aspect ratio (e.g., the aspect ratio of width to height, 8:9).

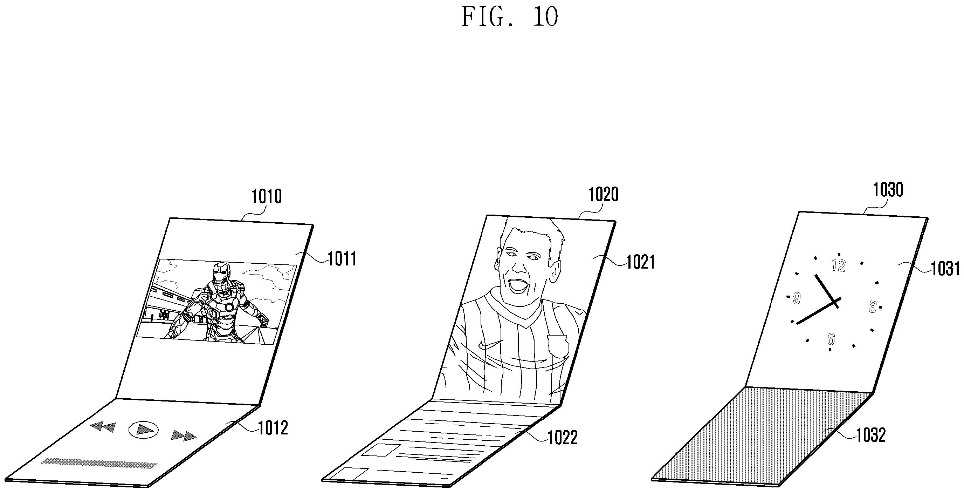

FIG. 10 illustrates diagrams of examples of an electronic device 201 that provides user interfaces, according to an embodiment of the present disclosure.

The electronic device 201 may be implemented to be foldable. In this case, the foldable type electronic device 201 is capable of detecting a state (e.g., a folding angle) of the electronic device 201. For example, when the foldable type electronic device 201 is completely unfolded (e.g., the display module 260 is flat so that the folding angle is 180° seen from the side), it performs the operations shown in FIGs. 4, 6, 7, and 8.

When the foldable type electronic device 201 is folded at a certain angle, it is capable of splitting and displaying the screen area of the display module 260 on the basis of the folded line.

As shown in diagram 1010, when the content and/or application being executed is multimedia, the electronic device 201 is capable of displaying multimedia content 1011 on one of the screen areas of the display module 260, split based on the folded line of the display module 260, in a preset aspect ratio and multimedia control-related content 1012 on the other screen area, in a preset aspect ratio.

As shown in diagram 1020, when the content and/or application being executed is content or an application 1021 related to multimedia and content or an application 1022 related to the Internet, the electronic device 201 is capable of displaying the content or an application 1021 related to multimedia on one of the screen areas of the display module 260, split based on the folded line of the display module 260, in a preset aspect ratio and the content or an application 1022 related to the Internet on the other screen area, in a preset aspect ratio.

As shown in diagram 1030, when the electronic device 201 displays an idle mode screen or a home screen, it is capable of displaying: the idle mode screen or a home screen (e.g., a clock screen) on one of the screen areas of the display module 260, split based on the folded line of the display module 260, in a preset aspect ratio.

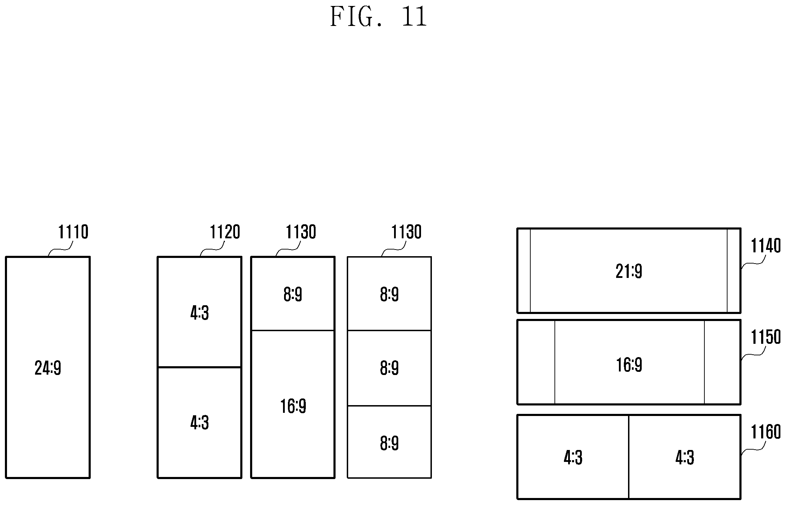

FIG. 11 illustrates diagrams of examples of an electronic device 201 that provides user interfaces, according to an embodiment of the present disclosure.

The electronic device 201 is capable of detecting its state, e.g., an orientation of the electronic device 201 (e.g., width and length).

When the electronic device 201 is in the portrait display mode, it is capable of displaying split screen in various aspect ratios as shown in diagrams 1110, 1120, 1130, and 1140. For example, when the electronic device 201 displays a single screen on the display module 260, the aspect ratio may be an aspect ratio of width to height, 24:9 as shown in diagram 1110. When the electronic device 201 is in the portrait display mode and provides split screens, the aspect ratios of split screens may be the same aspect ratio of width to height, e.g., 4:3 or 8:9 shown in diagrams 1120 and 1140, respectively. Alternatively, when the electronic device 201 is in the portrait display mode and provides split screens, the aspect ratios of split screens may be aspect ratios of width to height varying depending on the split screens, e.g., 8:9 and 16:9, as shown in diagram 1130.

When the electronic device 201 is in the landscape display mode, it is capable of displaying split screen in various aspect ratios as shown in diagrams 1150, 1160, and 1170. For example, when the electronic device 201 displays a single screen on the display module 260, the aspect ratio may be an aspect ratio of width to height, 21:9 or 16:9, as shown in diagrams 1150 or 1160 respectively. In this case, the electronic device 201 may process and display part of the split screen in black on the display, thereby providing the content displayed thereon with an immersive feeling effect.

When the electronic device 201 is in the landscape display mode and provides split screens, the aspect ratios of split screens may be the same aspect ratio of width to height, e.g., 4:3, as shown in diagram 1170. When the electronic device 201 is in the landscape display mode and provides split screens, the aspect ratios of split screens may be aspect ratios of width to height varying depending on the split screens, e.g., 2 1:9 and 16:9, as shown in diagrams 1150 and 1160.

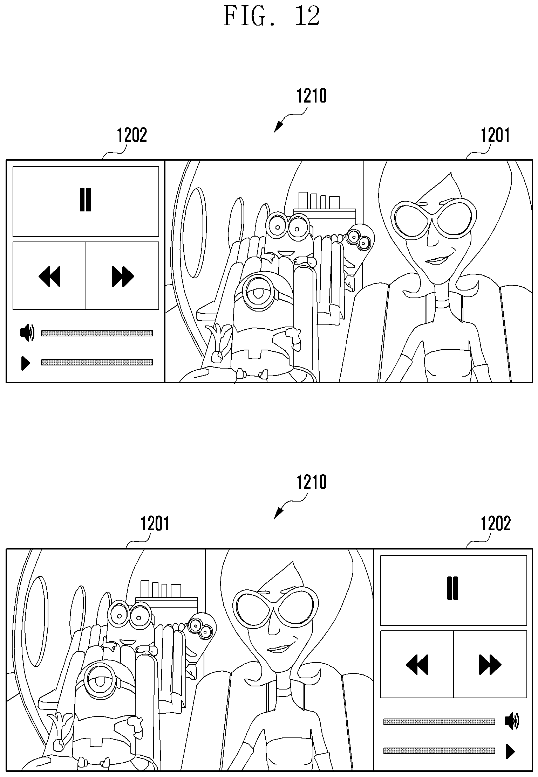

FIG. 12 illustrates diagrams of examples of an electronic device 201 that provides user interfaces according to gripping states, according to an embodiment of the present disclosure.

Diagram 1210 shows split screens of an electronic device 201 in an aspect ratio when the user grips the electronic device 201 with the left hand. Diagram 1220 shows split screens of an electronic device 201 in an aspect ratio when the user grips the electronic device 201 with the right hand.

As shown in diagram 1210, when the user grips the electronic device 201 with the left hand, the electronic device 201 splits the screen of the display module 260 in a preset split ratio and displaying multimedia content 1201 and multimedia control-related content 1202 on the split screens.

When splitting the screen of the display module 260 in a preset split ratio and displaying multimedia content 1201 and multimedia control-related content 1202 on the split screens, the electronic device 201 displays the multimedia content 1201 and the multimedia control-related content 1202 on the right and left split areas of the split screen of the display module 260, in a preset ratio, respectively.

As shown in diagram 1220, when the user grips the electronic device 201 with the right hand, the electronic device 201 splits the screen of the display module 260 in a preset split ratio and displaying multimedia content 1201 and multimedia control-related content 1202 on the split screens.

When splitting the screen of the display module 260 in a preset split ratio and displaying multimedia content 1201 and multimedia control-related content 1202 on the split screens, the electronic device 201 displays the multimedia content 1201 and the multimedia control-related content 1202 on the left and right split areas of the split screen of the display module 260, in a preset ratio, respectively.

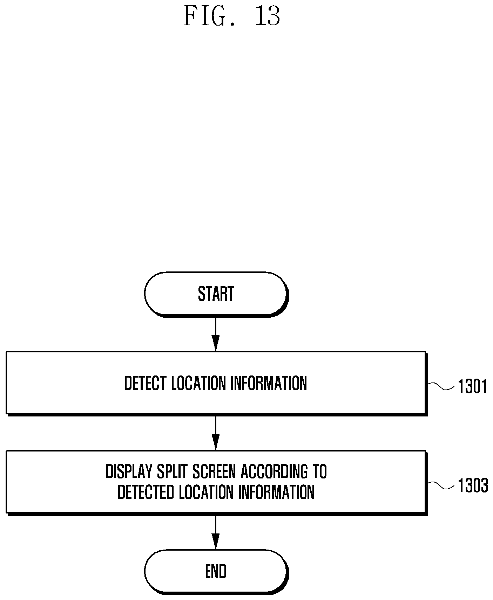

FIG. 13 is a flowchart of a user interface providing method, according to an embodiment of the present disclosure.

The electronic device 201 is capable of detecting its location in response to a command of the processor 210 in step 1301.

The electronic device 201 is capable of obtaining its geographical location-information using a sensor module 240 and/or a communication module 220. An example of the sensor module 240 is the acceleration sensor 240E. Examples of the communication module 220 are the cellular module 221, the WiFi module 223, the BT module 225, the GNSS module 227 (e.g., a GPS module, a Glonass module, a Beidou module or a Galileo module), the NFC module 228, and the RF module 229.

The electronic device 201 is capable of displaying split screen based on the obtained geographical location-information, on the display module 260, in response to a command of the processor 210 in step 1303. The electronic device 201 is capable of having set or stored information regarding the number of split screens or the screen split ratios to be displayed according to the obtained geographical location-information.

For example, when the electronic device 201 obtains geographical location-information, e.g., home or worksite, it may store the number of split screens or the split ratios of screens to be displayed which vary depending on details of the obtained geographical location-information.

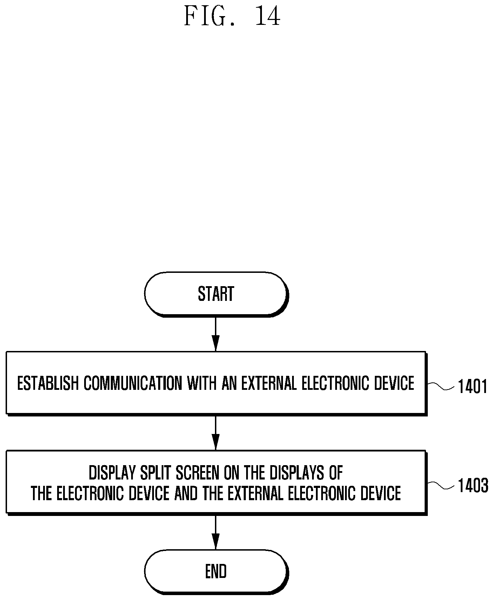

FIG. 14 is a flowchart of a user interface providing method, according to an embodiment of the present disclosure.

The electronic device 201 is capable of establishing communication with the electronic device 102, the electronic device 104, or server 106, in response to a command) of the processor 210 in step 1401.

The electronic device 201 is capable of establishing communication with the electronic device 102, the electronic device 104, or server 106, via a communication module 220. Examples of the communication module 220 are the cellular module 221, the WiFi module 223, the BT module 225, the GNSS module 227, the NFC module 228, and the RF module 229.

The electronic device 201 is capable of displaying the split screens on the display of electronic device 201 and on the display of the connected electronic device 102, the electronic device 104, or server 106, in response to a command of the processor 210 in step 1403.

When the split screens are displayed on the displays of the electronic device 201 and the connected electronic device 102, the second external electronic device 104, or server 106, the electronic device 201 is capable of displaying the same split screen on the display of the electronic device 201 and on the display of the connected electronic device 102, the second external electronic device 104, or server 106.

When the split screens are displayed on the displays of the electronic device 201 and the connected electronic device 102, the second external electronic device 104, or server 106, the electronic device 201 is capable of displaying, on the display, the split screen that differs from that displayed on the display of the connected external electronic device. For example, when an executed application is a multimedia application, the electronic device 201 displays the multimedia application control-related screen on the display; however, the connected electronic device 102, the second external electronic device 104, or server 106 displays the executed content screen on the display.

When the split screen is displayed on the displays of the electronic device 201 and the electronic device 102, the second external electronic device 104, or server 106, the split ratio and/or the number of split screens are adjusted according to a user's operation (e.g., a user input).

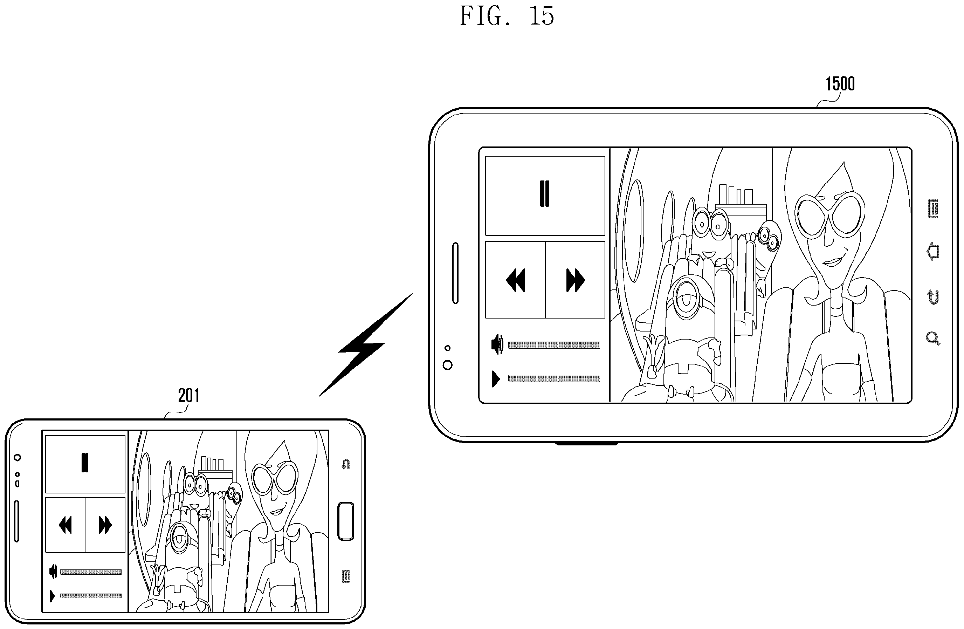

FIG. 15 illustrates a diagram of an example of an electronic device 201 that provides a user interface when it is connected to an external electronic device 1500 (e.g., the electronic device 102, the second external electronic device 104, or server 106), according to an embodiment of the present disclosure.

In the method of displaying split screen on the displays of the electronic device 201 and the external electronic device 1500 connected to the electronic device 201, it may display the same split screen on the displays of the electronic device 201 and the connected external electronic device 1500.

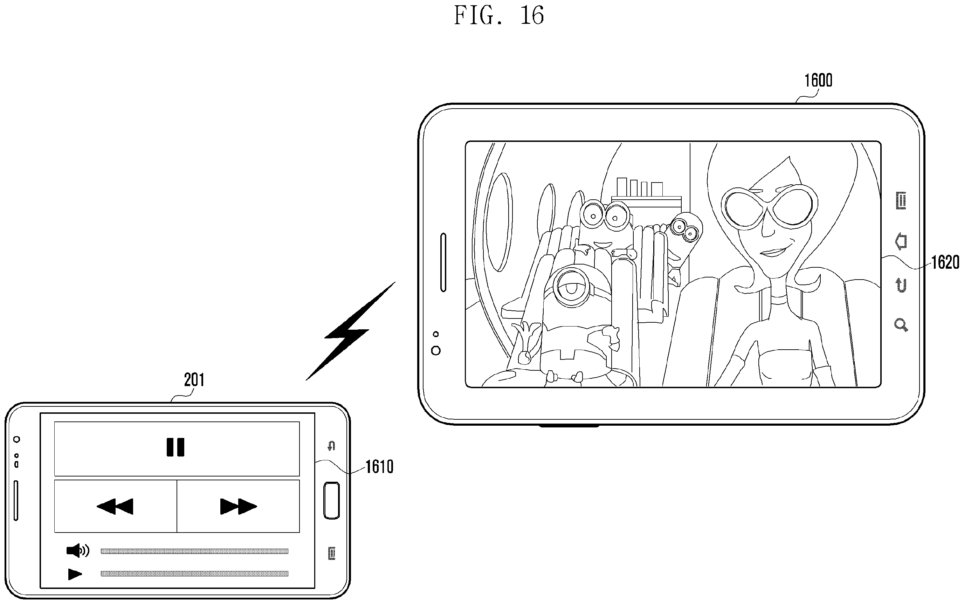

FIG. 16 illustrates a diagrams of an example of an electronic device 201 that provides a user interface when it is connected to an external electronic device 1600 (e.g., the electronic device 102, the second external electronic device 104, or server 106), according to an embodiment of the present disclosure.

In the method of displaying split screen on the displays of the electronic device 201 and the external electronic device 1600 connected to the electronic device 201, it may display split screen on the display of the connected external electronic device 1600, which differs from that displayed on the display of the electronic device 201. For example, when an executed application is a multimedia application, the electronic device 201 displays the multimedia application control-related screen 1610 on the display; however, the connected external electronic device 1600 displays the executed content screen 1620 on the display.

As described above, the method and apparatus according to various embodiments of the present disclosure is capable of providing an electronic device with various user interfaces for switching between screens, thereby increasing user convenience.

At least part of the method (e.g., operations/steps) or devices (e.g., modules or functions) may be implemented with instructions which can be stored, as a form of program module, in non-transitory computer-readable storage media (e.g., memory 130). One or more processors (e.g., processor 120) can execute the instructions, thereby performing the functions.

A non-transitory computer-readable recording medium is implemented to store software for executing instructions that enable at least one processor to perform a user interface method that includes identifying content or an application which is being executed on an electronic device 201 and displaying a split screen according to the identified content or an application.

Examples of the non-transitory computer-readable storage media include: magnetic media, such as hard disks, floppy disks, magnetic tape, etc.; optical media such as Compact Disc ROM (CD-ROM), DVD, etc.; magneto-optical media, such as floptical disks; and hardware devices such as ROM, RAM, flash memory, etc. Examples of program instructions include machine code instructions created by assembly languages, such as a compiler, and code instructions created by a high-level programming language executable in computers using an interpreter, etc. The described hardware devices may be configured to act as one or more software modules to perform the operations of various embodiments described above, or vice versa.

Modules or program modules may include at least one or more of the above-mentioned components, some of the above-mentioned components may be omitted, or other additional components may be further included. Operations executed by modules, program modules, or other components may be executed by a successive method, a parallel method, a repeated method, or a heuristic method. Also, some operations may be executed in a different order or may be omitted, and other operations may be added. Embodiments of the present disclosure described and shown in the drawings are provided as examples to describe technical content and help understanding but do not limit the scope of the present disclosure.

While the present disclosure has been shown and described with reference to certain embodiments thereof, it will be understood by those skilled in the art that various changes in form and details may be made therein without departing from the scope of the present disclosure. Therefore, the scope of the present disclosure should not be defined as being limited to the embodiments, but should be defined by the appended claims.

## Claims

1. A user interface displaying method of an electronic device (101) comprising:
classifying features of a first application into a first category;
classifying features of a second application into a second category;
wherein a category refers to a type of the application, the applications being identified as being of different types;
storing, in the memory (130) of the electronic device, information regarding the categories of the classified features of the first and second applications;
identifying an aspect ratio of an application being executed, and a split ratio, based on the stored information regarding the category of the classified features of the application being executed, wherein the application being executed is between the first and the second applications; displaying the first application and the second application in a split screen according to the identified split ratio and the identified aspect ratio.

2. The method of claim 1, wherein when the electronic device (101) is a foldable type of electronic device, the method further comprises:
detecting a folded state of the electronic device,
wherein when the folded state of the electronic device is completely unfolded displaying the first content or the first application and the second content or the second application in the split screen according to the identified split ratio and the identified aspect ratio.

3. An electronic device comprising:
a display; and
a processor that is configured to classify features of a first application into a first category;
classify features of a second application into a second category;
wherein a category refers to a type of the application, the applications being identified as being of different types;
storing, in the memory (130) of the electronic device, information regarding the categories of the classified features of the first and second applications;
identifying an aspect ratio of an application being executed, and a split ratio, based on the stored information regarding the category of the classified features of the application being executed, wherein the application being executed is between the first and the second applications; displaying the first application and the second application in a split screen according to the identified split ratio and the identified aspect ratio.

4. The electronic device of claim 3, wherein when the electronic device (101) is a foldable type of electronic device, the processor (120) is
further configured to detect a folded state of the electronic device, wherein when the folded state of the electronic device is completely unfolded display the first content or the first application and the second content or the second application in the split screen according to the identified split ratio and the identified aspect ratio.

5. A non-transitory computer-readable recording medium that stores software for executing instructions that enable at least one processor (120) to perform, in an electronic device (101), a user interface displaying method comprising:
classifying features of a first application into a first category;
classifying features of a second application into a second category; wherein a category refers to a type of the application, the applications being identified as being of different types;
storing, in the memory (130) of the electronic device, information regarding the categories of the classified features of the first and second applications;
identifying an aspect ratio of an application being executed, and a split ratio, based on the stored information regarding the category of the classified features of the application being executed, wherein the application being executed is between the first and the second applications;
displaying the first application and the second application in a split screen according to the identified split ratio and the identified aspect ratio.

## Patentansprüche

1. Verfahren zum Anzeigen einer Benutzerschnittstelle einer elektronischen Vorrichtung (101), das Folgendes umfasst:
Klassifizieren von Merkmalen einer ersten Anwendung in eine erste Kategorie;
Klassifizieren von Merkmalen einer zweiten Anwendung in eine zweite Kategorie;
wobei sich eine Kategorie auf einen Typ der Anwendung bezieht, wobei die Anwendungen als von verschiedenen Typen identifiziert werden;
Speichern im Speicher (130) der elektronischen Vorrichtung von Informationen bezüglich der Kategorien der klassifizierten Merkmale der ersten und zweiten Anwendungen;
Identifizieren eines Seitenverhältnisses einer Anwendung, die ausgeführt wird, und eines Teilungsverhältnisses, basierend auf den gespeicherten Informationen bezüglich der Kategorie der klassifizierten Merkmale der Anwendung, die ausgeführt wird,
wobei die Anwendung, die ausgeführt wird, zwischen der ersten und der zweiten Anwendung liegt;
Anzeigen der ersten Anwendung und der zweiten Anwendung auf einem geteilten Bildschirm gemäß dem identifizierten Teilungsverhältnis und dem identifizierten Seitenverhältnis.

2. Verfahren nach Anspruch 1, wobei, wenn die elektronische Vorrichtung (101) eine zusammenklappbare elektronische Vorrichtung ist, das Verfahren ferner Folgendes umfasst:
Erfassen eines zusammengeklappten Zustands der elektronischen Vorrichtung,
wobei, wenn der zusammengeklappte Zustand der elektronischen Vorrichtung vollständig aufgeklappt ist, Anzeigen des ersten Inhalts oder der ersten Anwendung und des zweiten Inhalts oder der zweiten Anwendung auf dem geteilten Bildschirm gemäß dem identifizierten Teilungsverhältnis und dem identifizierten Seitenverhältnis.

3. Elektronische Vorrichtung, die Folgendes umfasst:
ein Display; und
einen Prozessor, der dazu konfiguriert ist, Merkmale einer ersten Anwendung in eine erste Kategorie zu klassifizieren;
Klassifizieren der Merkmale einer zweiten Anwendung in eine zweite Kategorie;
wobei sich eine Kategorie auf einen Typ der Anwendung bezieht, wobei die Anwendungen als von verschiedenen Typen identifiziert werden;
Speichern im Speicher (130) der elektronischen Vorrichtung von Informationen bezüglich der Kategorien der klassifizierten Merkmale der ersten und zweiten Anwendungen;
Identifizieren eines Seitenverhältnisses einer Anwendung, die ausgeführt wird, und eines Teilungsverhältnisses, basierend auf den gespeicherten Informationen bezüglich der Kategorie der klassifizierten Merkmale der Anwendung, die ausgeführt wird,
wobei die Anwendung, die ausgeführt wird, zwischen der ersten und der zweiten Anwendung liegt;
Anzeigen der ersten Anwendung und der zweiten Anwendung auf einem geteilten Bildschirm gemäß dem identifizierten Teilungsverhältnis und dem identifizierten Seitenverhältnis.

4. Elektronische Vorrichtung nach Anspruch 3, wobei, wenn die elektronische Vorrichtung (101) eine zusammenklappbare elektronische Vorrichtung ist, der Prozessor (120) ferner so konfiguriert ist, dass er einen zusammengeklappten Zustand der elektronischen Vorrichtung erfasst, wobei, wenn der zusammengeklappte Zustand der elektronischen Vorrichtung vollständig aufgeklappt ist, Anzeigen des ersten Inhalts oder der ersten Anwendung und des zweiten Inhalts oder der zweiten Anwendung auf dem geteilten Bildschirm gemäß dem identifizierten Teilungsverhältnis und dem identifizierten Seitenverhältnis.

5. Nichtflüchtiges, computerlesbares Aufzeichnungsmedium, das Software zum Ausführen von Befehlen speichert, die mindestens einen Prozessor (120) in die Lage versetzen, in einer elektronischen Vorrichtung (101) ein Verfahren zum Anzeigen einer Benutzerschnittstelle durchzuführen, das Folgendes umfasst:
Klassifizieren von Merkmalen einer ersten Anwendung in eine erste Kategorie;
Klassifizieren von Merkmalen einer zweiten Anwendung in eine zweite Kategorie; wobei sich eine Kategorie auf einen Typ der Anwendung bezieht, wobei die Anwendungen als von verschiedenen Typen identifiziert werden;
Speichern im Speicher (130) der elektronischen Vorrichtung von Informationen bezüglich der Kategorien der klassifizierten Merkmale der ersten und zweiten Anwendungen;
Identifizieren eines Seitenverhältnisses einer Anwendung, die ausgeführt wird, und eines Teilungsverhältnisses, basierend auf den gespeicherten Informationen bezüglich der Kategorie der klassifizierten Merkmale der Anwendung, die ausgeführt wird,
wobei die Anwendung, die ausgeführt wird, zwischen der ersten und der zweiten Anwendungen liegt;
Anzeigen der ersten Anwendung und der zweiten Anwendung auf einem geteilten Bildschirm gemäß dem identifizierten Teilungsverhältnis und dem identifizierten Seitenverhältnis.

## Revendications

1. Procédé d'affichage d'interface utilisateur d'un dispositif électronique (101) comprenant :
classer des caractéristiques d'une première application dans une première catégorie ;
classer des caractéristiques d'une deuxième application dans une deuxième catégorie ;
où une catégorie fait référence à un type de l'application, les applications étant identifiées comme étant de types différents ;
stocker, dans la mémoire (130) du dispositif électronique, des informations concernant les catégories des caractéristiques classées de la première et de la deuxième application ;
identifier un rapport hauteur/largeur d'une application en cours d'exécution, et un rapport de division, sur la base des informations stockées concernant la catégorie des caractéristiques classées de l'application en cours d'exécution,
où l'application en cours d'exécution est entre la première et la deuxième application ;
afficher la première application et la deuxième application dans un écran divisé selon le rapport de division identifié et le rapport hauteur/largeur identifié.

2. Procédé selon la revendication 1, où lorsque le dispositif électronique (101) est un dispositif électronique de type pliable, le procédé comprend en outre :
détecter un état plié du dispositif électronique,
où, lorsque l'état plié du dispositif électronique est complètement déplié, afficher le premier contenu ou la première application et le deuxième contenu ou la deuxième application dans l'écran divisé selon le rapport de division identifié et le rapport hauteur/largeur identifié.

3. Dispositif électronique comprenant :
une unité d'affichage; et
un processeur qui est configuré pour classer des caractéristiques d'une première application dans une première catégorie ;
classer des caractéristiques d'une deuxième application dans une deuxième catégorie ;
où une catégorie fait référence à un type de l'application, les applications étant identifiées comme étant de types différents ;
stocker, dans la mémoire (130) du dispositif électronique, des informations concernant les catégories des caractéristiques classées de la première et de la deuxième application ;
identifier un rapport hauteur/largeur d'une application en cours d'exécution, et un rapport de division, sur la base des informations stockées concernant la catégorie des caractéristiques classées de l'application en cours d'exécution,
où l'application en cours d'exécution se situe entre la première et la deuxième application ;
afficher la première application et la deuxième application dans un écran divisé selon le rapport de division identifié et le rapport hauteur/largeur identifié.

4. Dispositif électronique selon la revendication 3, où lorsque le dispositif électronique (101) est un dispositif électronique de type pliable, le processeur (120) est en outre configuré pour détecter un état plié du dispositif électronique, où lorsque l'état plié du dispositif électronique est complètement déplié, le premier contenu ou la première application et le deuxième contenu ou la deuxième application sont affichés dans l'écran divisé selon le rapport de division identifié et le rapport hauteur/largeur identifié.

5. Support d'enregistrement non transitoire lisible par ordinateur qui stocke un logiciel pour exécuter des instructions qui permettent à au moins un processeur (120) d'exécuter, dans un dispositif électronique (101), un procédé d'affichage d'interface utilisateur comprenant :
classer des caractéristiques d'une première application dans une première catégorie ;
classer des caractéristiques d'une deuxième application dans une deuxième catégorie ; où une catégorie fait référence à un type de l'application, les applications étant identifiées comme étant de types différents ;
stocker, dans la mémoire (130) du dispositif électronique, des informations concernant les catégories des caractéristiques classées de la première et de la deuxième application ;
identifier un rapport hauteur/largeur d'une application en cours d'exécution, et un rapport de division, sur la base des informations stockées concernant la catégorie des caractéristiques classées de l'application en cours d'exécution,
où l'application en cours d'exécution est entre la première et la deuxième application ;
afficher la première application et la deuxième application dans un écran divisé selon le rapport de division identifié et le rapport hauteur/largeur identifié.
